## Europäisches Patentamt
## European Patent Office
## Office européen des brevets

(19)

(11) Veröffentlichungsnummer: **0 494 866 B1**

(12) **EUROPÄISCHE PATENTSCHRIFT**

(45) Veröffentlichungstag der Patentschrift: **06.07.94**

(51) Int. Cl.5: **C02F 1/30**, C02F 1/78

(21) Anmeldenummer: **90910488.7**

(22) Anmeldetag: **13.07.90**

(86) Internationale Anmeldenummer:
**PCT/AT90/00069**

(87) Internationale Veröffentlichungsnummer:
**WO 91/01946 (21.02.91 91/05)**

(54) **VERFAHREN UND VORRICHTUNG ZUR AUFBEREITUNG INSBESONDERE REINIGUNG VON HALOGENIERTE ETHYLENE ENTHALTENDEN WÄSSERN.**

(30) Priorität: **08.08.89 AT 1901/89**

(43) Veröffentlichungstag der Anmeldung:
**22.07.92 Patentblatt 92/30**

(45) Bekanntmachung des Hinweises auf die
Patenterteilung:
**06.07.94 Patentblatt 94/27**

(84) Benannte Vertragsstaaten:
**AT BE CH DE DK ES FR GB IT LI LU NL SE**

(56) Entgegenhaltungen:
**DE-B- 2 546 756**

**Wat.Res., Band 22, Nr. 5, 1988 P.Gehringer et al: siehe Seite 645-646**

(73) Patentinhaber: **Österreichisches Forschungszentrum Seibersdorf Ges.m.b.H.
Kramergasse 1
A-1010 Wien(AT)**

(72) Erfinder: **GEHRINGER, Peter
Radetzkystrasse 18/6
A-1030 Wien(AT)**
Erfinder: **PROKSCH, Emil
Laaerbergstrasse 34-38/9/24
A-1100 Wien(AT)**
Erfinder: **SZINOVATZ, Walter
Neusatzstrasse 21
A-7053 Hornstein(AT)**
Erfinder: **ESCHWEILER, Helmut
Hasenöhrlstrasse 63/14
A-1100 Wien(AT)**

**Beschreibung**

Die vorliegende Erfindung betrifft ein Verfahren zur Aufbereitung, insbesondere Reinigung, von halogenierte Ethylene enthaltenden Wässern, vorzugsweise Grundwässern, für Gebrauch und/oder Genuß durch Mensch und Tier sowie Vorrichtungen zur Durchführung des Verfahrens.

Umweltveränderungen und zunehmende Gewässerverunreinigungen gefährden in steigendem Maße die für Gebrauch und Genuß durch Menschen, aber auch Tiere und Pflanzen vorgesehenen Wässer, welche als Grundwässer Quellen oder Brunnen speisen, oder aber aus stehenden oder fließenden Oberflächengewässern gewonnen werden. In den letzten Jahren sind vor allem die durch unachtsamen Gebrauch von Lösungsmitteln in Gewerbe- Haushalt und Industrie verursachten Kontaminationen der genannten Wässer mit halogenierten Kohlenwasserstoffen, wie insbesondere Tri- und Perchlorethylen, bisweilen auch Dichlorethylen, in rasch wachsendem Ausmaß zum Problem geworden, das, wie sich zeigte, mit den zur Verfügung stehenden, für hohe Durchsatzmengen geeigneten Aufbereitungsverfahren nur unbefriedigend zu lösen ist.

Ein solches für eine Versorgung für Ballungsgebiete heute gebräuchliches Verfahren zur Minderung der Halogenkohlenwasserstoffgehalte in Trinkwässern unter die zugelassenen Maximalgrenzen stellt die Adsorption der genannten Schadstoffe an Aktivkohle dar. Wesentlicher Nachteil dieser Methode ist neben der oft nicht befriedigenden Wirksamkeit, daß bei der Regeneration der Aktivkohle die aus den Wässern entfernten Schadstoffe unverändert freigesetzt werden und dann gesondert zu entsorgen sind.

Bei der Suche nach wirkungsvollen Methoden wurde gefunden, daß eine Behandlung der kontaminierten Wässer mit Oxidantien, wie z.B. Chlor, Wasserstoffperoxid oder Ozon, zu einem wesentlichen Abbau der halogenierten Olefine praktisch nichts beitragen kann. Andere Untersuchungen, bei denen derart kontaminierte Wässer einer kombinierten Behandlung mit Ozon und UV-Strahlung unterworfen wurden, wie z.B. in G. Peyton u. W. Glaze Environ. Sci.Technol.22, 761-767 (1988) beschrieben, führten zum Ergebnis, daß ihre Leistungsfähigkeit für eine Aufbereitung mit den für eine Wasserversorgung benötigten Durchsatzmengen viel zu gering ist. Versuche mit Gamma-Strahlung auf wissenschaftlicher Basis zeigten, daß sich zwar brauchbare Abbaugrade erreichen ließen, die dafür benötigten Zeiten jedoch infolge der geringen Dosisleistung hoch waren und daher ebenfalls nur geringe Durchsätze zuließen, wie z.B. die Publikation Gehringer et al. Z.Wasser-Abwasser-Forsch.19,196-203(1986) zeigt.

Bei Versuchen mit einer Behandlung von kontaminierten Wässern mit Elektronenstrahlung zeigte sich, daß im Vergleich zur Gamma-Strahlung für einen bestimmten prozentuellen Abbau der Halogenkohlenwasserstoffe deutlich höhere Strahlendosen erforderlich waren. Besonders wenn Abbaugrade von über 90 % gefordert werden, steigt die dafür notwendige Elektronenstrahldosis überproportional an. (Siehe dazu auch die später folgende Tabelle 2).

Bei Untersuchungen über die Wirkung von Gamma-Strahlung im Verein mit Ozon, wie sie beispielsweise in Gehringer et al. Water Res.22,645-646(1988) beschrieben sind, konnte durchaus eine Erhöhung der Abbaurate von halogenierten Olefinen beobachtet werden, jedoch können auf Basis des dabei beobachteten Effektes der Abbauratensteigerung technische Verfahren zur Wasseraufbereitung bei hohen Durchsatzmengen immer noch nicht realisiert werden. Daneben besteht beim Einsatz von Gamma-Strahlenquellen noch das Risiko einer Kontamination des aufzubereitenden Wassers mit radioaktivem Material. Dazu kommt noch eine weitgehende Ablehnung der Bevölkerung gegenüber allem, was mit Radioaktivität zu tun hat.

Zum Mechanismus des Abbaues der halogenhaltigen Olefine in Wasser mittels ionisierender Strahlung und Ozon ist zu bemerken, daß diese Olefine mit Ozon direkt praktisch nicht reagieren. Ihr Abbau erfolgt vielmehr durch die Wirkung von OH-Radikalen, die aus dem bestrahlten Wasser und zusätzlich durch Einwirkung bestimmter Wasserradiolyseprodukte auf Ozon gebildet werden.

Der Erfindung lag nun die Aufgabe zugrunde, ein Verfahren zur Aufbereitung von mit halogenierten Olefinen kontaminierten Wässern zu entwickeln, welches bei den zu einer Wasserversorgung üblichen großen Durchsatzmengen und bei gegenüber der vorher beschriebenen Aktivkohle-Dekontamination verringertem Aufwand eine wirkungsvolle Reduktion der genannten Schadstoffe in den Wässern ermöglicht, ohne radioaktive Stoffe als Quelle für die dafür erforderliche Strahlungsenergie einzusetzen.

Elektronenbeschleuniger haben gegenüber Gamma-Strahlenquellen nicht nur den Vorteil, daß sie ionisierende Strahlung ohne Verwendung eines radioaktiven Materials erzeugen, sondern daß sie auch wesentlich höhere Strahlendosisleistungen liefern.

So vorteilhaft eine hohe Dosisleistung erscheint, haftet einer solchen hohen Leistung ein mit ihrer Steigerung immer gravierender ins Gewicht fallender Nachteil an: Es ist nämlich bekannt, daß mit steigender Dosisleistung die Rekombinationsreaktion der OH-Radikale rasch zunehmend an Bedeutung gewinnt, womit diese Radikale, die allein den oxidativen Abbau der Halogen-Olefine ermöglichen, für die Abbaureaktion in rasch steigendem Maße verloren gehen.

Es mußte daher bei den hohen Dosisleistungen, wie sie von Elektronen-Bestrahlungsanlagen geliefert werden, mit einem überproportionalen Absinken der OH-Radikalkonzentration infolge dieser Rekombinationsverluste gerechnet werden, womit diese Art der Bestrahlung zur Dekontamination großer Durchflußmengen an Wasser dem Fachmann nicht mehr attraktiv erscheinen konnte.

Überraschend wurde gefunden, daß bei Einwirkung von Elektronenstrahlung bei gleichzeitiger Einhaltung bestimmter Ozonkonzentrationen im zu behandelnden Wasser hohe Abbauraten mit im Vergleich zur Einwirkung anderer Strahlungsarten und Ozon um oft mehr als eine Größenordnung gesteigerten Durchsätzen erzielbar sind.

Gegenstand der Erfindung ist somit ein Verfahren der eingangs genannten Art, wobei die Wässer einer Einwirkung von Ozon und energiereicher, insbesondere ionisierender, Strahlung unterworfen werden, welches darin besteht, daß ein hinsichtlich der außer den genannten halogenierten Ethylenen vorhandenen Bestandteile und/oder Schadstoffe auf im wesentlichen Trinkwasserqualität gebrachtes und/oder solche aufweisendes von einer vorgeschalteten Behandlung her Ozon enthaltendes und/oder mit Ozon versetztes Wasser, insbesondere Grundwasser, im Durchfluß der Einwirkung von Elektronenstrahlung ausgesetzt wird, wobei die Ozonkonzentration im Wasser so eingestellt ist bzw. wird, daß das Wasser im wesentlichen unmittelbar nach Austritt aus dem Bereich der Strahlungseinwirkung eine Ozonkonzentration von mindestens 0,1 ppm aufweist.

Es wurde also in der Kombination von Elektronen-Bestrahlung mit Ozon eine Technik gefunden, welche entgegen den weiter oben beschriebenen negativen Erwartungen gerade bei der Behandlung der besonders problematischen Halogen-Olefine die Erreichung hoher Abbaugrade auch bei den hohen Dosisleistungen der Elektronen-Bestrahlungsanlagen mit vergleichsweise niedrigen Dosen ermöglicht.

Im Rahmen des neuen Verfahrens ist bei Austritt des Wassers aus dem Strahlungsbereich die Ozonkonzentration mit Werten von 0,1 ppm bzw.darüber wesentlich, denn damit läßt sich für den gesamten Strahlungsbereich ein für den aufgefundenen Wirkungssynergismus von Elektronenstrahlung und Ozon beim Abbau der Halogen-Olefine immer ausreichendes Ozonangebot sicherstellen.

Unter halogenierten Ethylenen sollen global insbesondere eine olefinische Doppelbindung aufweisende, Halogen enthaltende Kohlenwasserstoffe verstanden werden, wobei heute insbesondere Tri- und Tetrachlorethylen und eventuell Dichlorethylene in Wässern Problemstoffe darstellen.

Unter Trinkwasserqualität ist beispielsweise die Beschaffenheit von Wässern gemäß ÖNORM M6250 vom 1.3.1986 bzw. Trinkwasserverordnung vom 25.5.1986 in der BRD zu verstehen.

Unter "Bereich der Elektronenstrahlungseinwirkung" soll jener Volumsanteil des durchströmenden Wassers verstanden werden, welcher sich aus der Fläche des elektronendurchlässigen Fensters einer Durchflußkammer multipliziert mit deren Höhe ergibt.

Beim erfindungsgemäßen Vorgehen ist sichergestellt, daß im Strahlungseinwirkungsbereich immer ausreichend Ozon für den Schadstoffabbau vorhanden ist.

Besonderer Vorteil der Erfindung ist, daß auf Grund der hohen Abbauraten der genannten Schadstoffe sehr hohe Durchsätze an zu dekontaminierendem Wasser erzielt werden können, was insbesondere auch für die Sanierung von großen, an sich zwar Trinkwasserqualität aufweisenden, mit chlorierten Ethylenen in geringen, für menschlichen Genuß jedoch nicht zulässigen Mengen kontaminierten Grundwasserreserven, wie z.B. jener der für die Wasserversorgung von Ostösterreich wesentlichen Reserven in der Mitterndorfer Senke, von hoher Wichtigkeit ist. Ein weiterer wesentlicher Vorteil ist dadurch gegeben, daß infolge eines echten Abbaus der halogenierten Olefine zu völlig unbedenklichen Stoffen, wie im wesentlichen Kohlensäure und Chloridionen, eine wie beim Aktivkohleverfahren notwendige Nachentsorgung der aus dem Wasser abgetrennten Schadstoffe entfallen kann.

Es hat sich gezeigt, daß die Einhaltung der erforderlichen Ozonkonzentration auf günstige Weise gemäß einer vorteilhaften Verfahrensvariante erleichtert werden kann, wenn die Konzentration des Ozons im zu behandelnden Wasser beim Eintritt in den Bereich der Einwirkung der Elektronenstrahlung auf mindestens 1 ppm, vorzugsweise auf einen Wert zwischen 1 ppm und 10 ppm, eingestellt wird.

Zur Erreichung von für Wasserversorgungssysteme notwendigen Durchsätzen ist es technisch günstig, das Ozon enthaltende Wasser einer Elektronenstrahlung mit einer Energie von mindestens 0,5 MeV auszusetzen. Bei dieser Mindestenergie beträgt die maximale Eindringtiefe der Strahlung in das Wasser 1,4 mm, was im Verein mit einer entsprechenden Wahl der Bedingungen bei der Anlagengeometrie schon versorgungsadäquate Durchsätze ermöglicht.

Das neue Verfahren bewährt sich besonders in jenen niedrigen Konzentrationsbereichen, wo konventionelle Verfahren infolge hoher Verdünnungsgrade an Effizienz verlieren. Im wesentlichen bei Konzentrationen von etwa 1 ppm chlorierten Olefinen abwärts konnte sogar eine Beschleunigung des Abbaus im Vergleich zu über diesem Wert liegenden Konzentrationen beobachtet werden.

Dementsprechend ist es bevorzugt, Wenn ein Wasser mit einem Gehalt an halogenierten Ethylenen von bis zu 1000 ppb der Einwirkung von Ozon und Elektronenstrahlung unterworfen wird.

Wenn, wie gemäß einer weiteren vorteilhaften Ausführungsform der Erfindung vorgesehen ist, zur sicheren Aufrechterhaltung der genannten Mindestkonzentration von 0,1 ppm Ozon dem sich im Durchfluß befindlichen Wasser direkt im Bereich der Einwirkung der Elektronenstrahlung, bevorzugt quer zur Durchflußrichtung, zusätzlich Ozon, vorzugsweise in Form von mit Ozon angereichertem Starkwasser, zugeführt wird, können auch in höhere Mengen an Bikarbonaten und Nitraten enthaltenden Wässern wirkungsvoll die Gehalte an halogenierten Olefinen abgesenkt oder eliminiert werden.

Eine besonders günstige Nutzung des Synergismus zwischen Elektronenstrahlung und Ozongehalt läßt sich, wie gefunden wurde, bei Verwendung einer Durchflußkammer, deren Höhe größer ist als die Eindringtiefe der Elektronen, erzielen, wenn der der eindringenden Elektronenstrahlung zugekehrte Volumsanteil des die Durchflußkammer durchströmenden Wassers mit hohem Durchmischungsgrad mit dessen restlichem Volumsanteil, vorzugsweise durch Herbeiführung turbulenter Strömung, gemischt wird.

Durch diese Maßnahme kann eine Ausdehnung des Schadstoffabbaues vom der Strahlungsquelle nahen Volumsanteil auf den gesamten Einwirkungsbereich erreicht werden. Dadurch kann eine beachtliche Erhöhung des Durchsatzes erreicht werden oder, wenn eine solche nicht gefordert ist, kann mit einem Elektronenbeschleuniger entsprechend geringerer Leistung das Auslangen gefunden werden.

Gemäß einer weiteren vorteilhaften Verfahrensvariante kann so vorgegangen werden, daß im wesentlichen im gesamten Bereich der Elektronenstrahlungseinwirkung der Gehalt des Wassers an gelöstem Ozon auf einen Wert von mindestens 0,1 ppm gehalten wird.

Gegenstand der vorliegenden Erfindung ist weiters eine im Hinblick auf eine optimierte Nutzung der Elektronenstrahlung besonders vorteilhafte Ausführungsform einer Vorrichtung zur Durchführung des vorher beschriebenen Verfahrens. An dieser Stelle ist zu bemerken, daß aus der DE-A 25 46 756 für einen ganz anderen Zweck, nämlich für die Hygienisierung von Abwasserklärschlamm eine Vorrichtung mit einer Förderrinne für den Schlamm bekannt geworden ist, deren Boden im Strahlungsbereich einer über ihr angeordneten Elektronenstrahlenquelle als Düsenboden zur Zufuhr eines sauerstoffhaltigen Gases ausgebildet ist, wobei eine Einrichtung zur Zuführung des Klärschlamms in gleichmäßig dicker Schicht vorgesehen ist.

Die erfindungsgemäße Vorrichtung mit mindestens einem Elektronenbeschleuniger und mindestens einer im Bereich von dessen Strahlungskegel angeordneten, jeweils Zu- und Abführungen für fluides Medium aufweisenden und von diesem durchströmbaren Strahlungseinwirkungskammer, welche, bevorzugt an ihrer der Strahlungseinwirkung abgewandten Seite, Öffnungen für die Zufuhr eines ozonhältigen fluiden Mediums aufweist, ist nun dadurch gekennzeichnet, daß im wesentlichen am Beginn der an die von halogenierte Ethylene aufweisendem Wasser durchströmbaren Durchflußkammer anschließenden Abflußleitung ein Sensor zur Ermittlung des Ozongehaltes angeordnet ist, der über eine Steuerung mit mindestens einem Stellorgan für mindestens ein Zuflußregelorgan mindestens einer Starkwasserzuführungsleitung verbunden ist.

Mit dieser Vorrichtung kann der Ozongehalt in der Durchflußkammer besonders genau und ökonomisch geregelt werden. Der Sensor kann z.B. in einem von der Abflußleitung der Durchflußkammer abzweigenden by-pass als Durchflußzelle eines UV-Spektralphotometers ausgebildet sein.

Weiterer Gegenstand der Erfindung ist die Verwendung einer wie eben beschriebenen Vorrichtung mit mindestens einem Elektonenbeschleuniger und mindestens einer im Bereich von dessen Strahlungskegel angeordneten, jeweils Zu- und Abführungen für fluides Medium aufweisenden und von diesem durchströmbaren Strahlungseinwirkungskammer, welche, bevorzugt an ihrer der Strahlungseinwirkung abgewandten Seite Öffnungen für die Zufuhr eines ozonhältigen, fluiden Mediums aufweist, mit der Maßgabe, daß die Kammer von halogenierte Ethylene aufweisendem Wasser durchströmt wird und in dasselbe über die genannten Öffnungen mit Ozon angereichertes Starkwasser und/oder Ozon eingebracht wird, wobei im wesentlichen am Beginn der an die Durchflußkammer anschließenden Abflußleitung ein Sensor zur Ermittlung des Ozongehaltes angeordnet ist, der über eine Steuerung mit mindestens einem Stellorgan für mindestens ein Zuflußregelorgan mindestens einer Zuführungsleitung für Starkwasser zu den Öffnungen verbunden ist, für die Aufbereitung, insbesondere Reinigung, von halogenierte Ethylene enthaltenden Wässern für Gebrauch und/oder Genuß durch Mensch und Tier gemäß dem weiter oben beschriebenen Verfahren und dessen bevorzugten Ausführungsformen.

Um eine besonders gleichmäßige Aufrechterhaltung der Ozonkonzentration in dem der Elektronenstrahlung auszusetzenden kontaminierten Wasser zu gewährleisten, ist gemäß einer vorteilhaften Art der Verwendung vorgesehen, daß die der Einwirkung der Elektronenstrahlung abgewandte Seite der Kammer zumindest teilweise als Siebboden oder Fritte ausgebildet ist.

4

Dabei kann es gemäß einer konstruktiv relativ einfachen, jedoch, wie sich zeigte, den angestrebten Effekt des hohen Abbaugrades durchaus erfüllenden, Verwendungsvariante vorteilhaft sein, wenn der Boden der Kammer im wesentlichen im Bereich der Hälfte der Durchströmungsstrecke des Wassers mindestens eine quer zur Strömungsrichtung angeordnete Reihe von Öffnungen bzw. Düsen für die Zuführung von mit Ozon angereichertem Starkwasser und/oder Ozon aufweist.

Eine Erhöhung des Grades der Nutzung der Elektronenstrahlung und des eingebrachten Ozons läßt sich in vorteilhafter Weise bei Verwendung einer Vorrichtung erreichen, in welcher zusätzlich oder alternativ zur Ausgestaltung des Bodens als Siebboden oder Fritte in der Strahlungseinwirkungskammer Einbauten zur Erzeugung turbulenter Strömung angeordnet sind.

Mit einer solchen Anordnung kann auch bei relativ geringer Eindringtiefe der Elektronenstrahlung das die oben beschriebene Kammer durchfließende Wasser in diese Eindringtiefe wesentlich übersteigender Schichtdicke vorliegen.

Anhand des folgenden Beispiels wird die Erfindung näher erläutert.

Beispiel: Zwei verschiedene Wässer A und B, nämlich Wiener Hochquellenwasser und Quellwasser aus der Buckligen Welt, deren Zusammensetzung aus Tabelle 1 ersichtlich ist, wurden in den aus Tabelle 2, Spalte 1 angegebenen Ausgangskonzentrationen jeweils mit Tetrachlor- bzw. Trichlorethylen versetzt.

Tabelle 1

|  | Gesamthärte DH° | $HCO_3$-ppm | $NO_3$-ppm | Cl-ppm | $SO_4^{2}$-ppm |
|---|---|---|---|---|---|
| Wasser A | 9,6 | 195 | 6,5 | 4,5 | 31 |
| Wasser B | 5,5 | 99 | 4,0 | 5,0 | 21 |

Mittels Gamma-Strahlungsquelle (Co-60) mit einer Dosisleistung von etwa 1,5 Gy/s ( = Gray/Sekunde) und mittels eines 0,5-MeV-Elektronenbeschleunigers wurden bei einer Wassertemperatur von 10° C die Wässer A und B mit den angeführten Konzentrationen an chlorierten Ethylenen bestrahlt, wobei die Bestrahlungen jeweils ohne und mit Zusatz von Ozon (Konzentrationen etwa 3 ppm $O_3$ für die Wässer A und B mit Trichlorethylengehalt und etwa 5 ppm $O_3$ für die Wässer A und B mit Tetrachlorethylengehalt) vorgenommen wurden.

Die bei diesen Untersuchungen für die Abbaugrade von 90, 95 und 99 % ermittelten Dosiswerte sind aus den Spalten 3, 5, 7 und 9 der Tabelle 2 ersichtlich.

Tabelle 2

| 1 | 2 | 3 | 4 | 5 | 6 | 7 | 8 | 9 | 10 |
|---|---|---|---|---|---|---|---|---|---|
| Wasser/ Schadstoff | Ab- bau- grad % | Gamma-Bestrahlung | | | | Elektronenbestrahlung | | | |
| | | ohne $O_3$ | | mit $O_3$ | | ohne $O_3$ | | mit $O_3$ | |
| | | Dosis Gy | Durch- satz m³/h | Dosis Gy | Durch- satz m³/h | Dosis Gy | Durch- satz m³/h | Dosis Gy | Durch- satz m³/h |
| Wasser A mit 100 ppb Tetrachlor- ethylen | 90 | 185 | 253 | 50 | 936 | 390 | 1385 | 48 | 11250 |
| | 95 | 240 | 195 | 65 | 720 | 600 | 900 | 68 | 7941 |
| | 99 | 370 | 126 | 100 | 468 | 1220 | 443 | 105 | 5143 |
| Wasser A mit 100 ppb Trichlor- ethylen | 90 | 100 | 468 | 10 | 4680 | 205 | 2634 | 9 | 60000 |
| | 95 | 130 | 360 | 20 | 2340 | 385 | 1403 | 21 | 25714 |
| | 99 | 195 | 240 | 60 | 780 | 1050 | 514 | 60 | 9000 |
| Wasser B mit 100 ppb Tetrachlor- ethylen | 90 | 96 | 487 | 14 | 3343 | 135 | 4000 | 15 | 36000 |
| | 95 | 125 | 374 | 25 | 1872 | 190 | 2842 | 25 | 21600 |
| | 99 | 193 | 242 | 50 | 936 | 425 | 1270 | 52 | 10385 |
| Wasser B mit 100 ppb Trichlor- ethylen | 90 | 58 | 807 | 9 | 5200 | 90 | 6000 | 10 | 54000 |
| | 95 | 75 | 624 | 11 | 4255 | 160 | 3375 | 11 | 49090 |
| | 99 | 115 | 407 | 20 | 2340 | 425 | 1270 | 22 | 24545 |

Auf Basis dieser experimentell ermittelten Dosiswerte wurden theoretische Durchsätze in m³/h errechnet, und zwar unter der Annahme, daß für die Bestrahlung eine technisch noch realisierbare Co-60-Gammastrahlenquelle mit 1 MCi Co-60-Aktivität, entsprechend einer Leistung von etwa 13 kW, und als Elektronenstrahlquelle ein technisch üblicher Beschleuniger im oberen Leistungsbereich mit einer Energie von 3 MeV und einem Strahlstrom von 50 mA, entsprechend einer Leistung von 150 kW, zur Verfügung steht.

Die entsprechenden Daten zeigen die Spalten 4, 6, 8 und 10.

Ein Vergleich der für die verschiedenen Proben der Wässer A und B erhaltenen Dosiswerte zeigt den unerwarteten Effekt beim Abbau der Schadstoffe mittels Elektronenstrahlung im Verein mit Ozon.

Es ist ersichtlich, daß bei Abwesenheit von Ozon in den Wässern bei Anwendung von Elektronenstrahlung bei jeweils gleichen Abbaugraden, insbesondere wenn diese ansteigen, wesentlich höhere Dosen erforderlich sind als bei Einsatz von Gammastrahlung, z.B. steigen bei 90 % und 99 % Abbau die Dosen bei Einsatz von Elektronenstrahlung gegenüber von jenem von Gammastrahlung um Faktoren von etwa 2 bis etwa 4 - 5 an. Bei Anwesenheit von Ozon zeigte sich überraschend, daß die bei Einsatz von Elektronen-Strahlung erhaltenen Dosen praktisch mit jenen bei Einsatz von Gammastrahlung identisch wurden. Durch den gezielten Ozonzusatz lassen sich also mittels Elektronenstrahlung praktisch gleich hohe Abbauraten der Schadstoffe wie bei Gammastrahlen erreichen.

Die zur Unterstreichung der Bedeutung dieser Ergebnisse für die Praxis errechneten Durchsatzwerte zeigen, daß bei Einsatz von Elektronenstrahlung mit Ozon sich etwa 5 bis 12mal höhere Durchsätze als bei Anwendung von Gammastrahlung mit Ozon erzielen lassen.

Die zur weiteren Erläuterung der Erfindung dienende Zeichnung zeigt eine schematische Darstellung einer bevorzugten Ausführungsform einer zur Durchführung des neuen Verfahrens geeigneten Anlage mit Hervorhebung der der Elektronenstrahlung auszusetzenden Durchflußkammer.

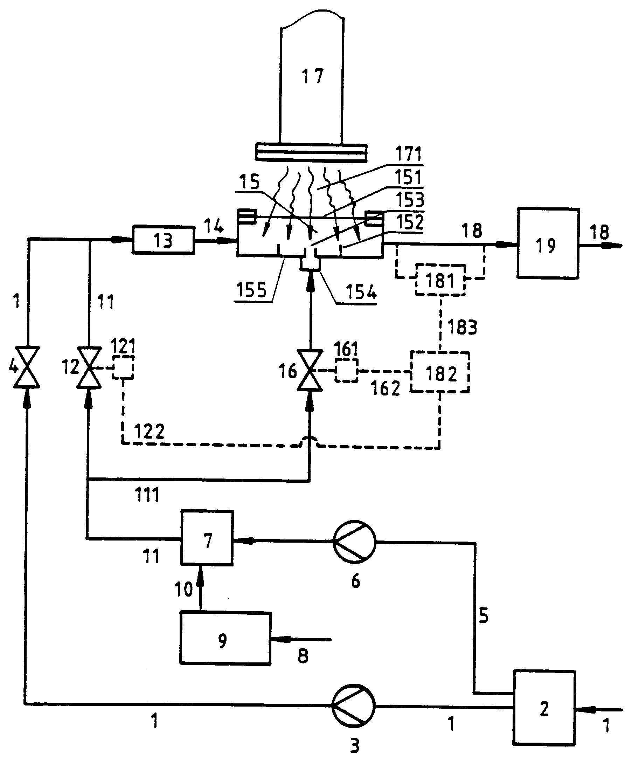

Bei der in der Zeichnung schematisch gezeigten Anlage zur Behandlung von mit chlorierten Olefinen belasteten Wässern wird über Leitung 1, einen Pufferbehälter 2 und eine Pumpe 3 ein Hauptstrom des schadstoffhaltigen Wassers zugefördert, wobei vom Behälter 2 über eine Zweigleitung 5 mittels Pumpe 6 ein Teilstrom des Wassers in einen Ozon-Starkwasserbehälter und Mischer 7 eingebracht wird, der seinerseits über Leitung 10 aus dem über eine Zuleitung 8 mit Sauerstoff gespeisten Ozonisator 9 mit Ozon versorgbar ist. Im Behälter 7 wird mit Ozon angereichertes "Starkwasser" erzeugt und dieses über Leitung 11 der oben erwähnten Leitung 1 für unbehandelt gebliebenes Ausgangswasser zugeleitet, wonach die vereinigten Ströme 1 und 11 im Mischer 13 zur Einstellung einer gewünschten Ausgangskonzentration an Ozon innig vermischt werden. Das so erhaltene, nun ozonhältige, zu dekontaminierende Wasser wird über Leitung 14 in die - hier unterhalb eines Elektronenbeschleunigers 17 mit einem Strahlungsbereich 171 angeordnete - Durchflußkammer 15 mit elektronendurchlässigem Fenster 151 eingebracht und die Kammer durchströmend der Einwirkung der Elektronenstrahlung mit dem Bereich 171 ausgesetzt. Etwa in der Hälfte der Durchflußstrecke weist der Boden 155 der Kammer 15 eine Reihe von mit einem Zuführungskanal 154 in Verbindung stehenden Düsenöffnungen 153 auf, über welche zur Sicherung einer Mindestkonzentration an Ozon in der Kammer 15 mittels von der Starkwasserleitung 11 abzweigenden Teilstromes 111 Starkwasser direkt in die Bestrahlungskammer 15 eingebracht werden kann. Diese Ausführungdetails können selbstverständlich dann entfallen, wenn über die Leitung 1 kontaminiertes Wasser zugeführt wird, welches z.B. von einer schon vorher erfolgten Behandlung her soviel Ozon enthält, daß die wesentliche Verfahrensbedingung einer Ozonkonzentration von mindestens 0,1 ppm nach dem Verlassen der Durchflußkammer 15 erfüllt ist. Die Kammer 15 weist zur Erhöhung der Wirksamkeit Elemente, z.B. Schikanen 152, zur Erzeugung turbulenter Strömung auf. In der Kammer 15 erfolgt infolge des oben beschriebenen Synergismus zwischen Elektronenstrahlung und Ozon der Abbau der chlorierten Ethylene zu unschädlichen Stoffen. Das in Kammer 15 nun erfindungsgemäß aufbereitete Wasser wird über eine ein Ausgleichsgefäß 19 aufweisende Leitung 18 abgeführt und kann in ein Wasserversorgungssystem direkt eingespeist werden. Die in der Zeichnung gezeigten Durchflußregelorgane 4, 12 und 16 dienen einer aufeinander abgestimmten Einstellung der Ströme von zu behandelndem Wasser und ozonisiertem Starkwasser.

Mit unterbrochenen Linien ist eine bevorzugte Ausführungsform einer Regelung der erfindungsgemäßen Vorrichtung dargestellt.

An der die Durchflußkammer 15 verlassenden Leitung 18 ist ein durch einen by-pass mit nicht gezeigtem Spektralphotometer gebildeter Sensor 181 angeordnet, der über eine Signalleitung 183 mit einer Steuerung 182 verbunden ist. Von der Steuerung 182 gehen in der gezeigten Anordnung zwei Steuerleitungen 162, 122 zu Stellorganen 161, 121 für die Ventile 16 und 12 in der Starkwasserteilstromleitung 111 und der Starkwasserleitung 11 aus. Auf diese Weise kann eine Steuerung der Ozonzufuhr sowohl im der Durchflußkammer 15 zugeführten Wasser als auch innerhalb der Kammer 15 selbst erfolgen.

Die beschriebene Vorrichtung kann auch eine Durchflußkammer 15 ohne Fenster 151 aufweisen. Für diesen Fall sind Vorkehrungen zur Entsorgung der aus dem Wasser in die Gasphase übergegangennen Schadstoffe zu treffen.

## Patentansprüche

1. Verfahren zur Aufbereitung, insbesondere Reinigung, von halogenierte Ethylene enthaltenden Wässern, vorzugsweise Grundwässern, für Gebrauch und/oder Genuß durch Mensch und Tier, wobei die Wässer einer Einwirkung von Ozon und energiereicher, insbesondere ionisierender, Strahlung unterworfen werden, **dadurch gekennzeichnet,** daß ein hinsichtlich der außer den genannten halogenierten Ethylenen vorhandenen Bestandteile und/oder Schadstoffe im wesentlichen auf Trinkwasserqualität gebrachtes und/oder solche aufweisendes und von einer vorgeschalteten Behandlung her Ozon enthaltendes und/oder gesondert mit Ozon versetztes Wasser, insbesondere Grundwasser, im Durchfluß der Einwirkung von Elektronenstrahlung ausgesetzt wird, wobei die Ozonkonzentration im Wasser in der Weise eingestellt ist bzw. wird, daß das Wasser im wesentlichen unmittelbar nach Austritt aus dem Bereich der Strahlungseinwirkung eine Ozonkonzentration von mindestens 0,1 ppm aufweist.

2. Verfahren nach Anspruch 1, **dadurch gekennzeichnet,** daß die Konzentration des Ozons im zu behandelnden Wasser beim Eintritt in den Bereich der Einwirkung der Elektronenstrahlung auf mindestens 1 ppm, vorzugsweise auf einen Wert zwischen 1 und 10 ppm, eingestellt wird.

3. Verfahren nach Anspruch 1 oder 2, **dadurch gekennzeichnet,** daß das Ozon enthaltende Wasser einer Elektronenstrahlung mit einer Energie von mindestens 0,5 MeV ausgesetzt wird.

4. Verfahren nach einem der Ansprüche 1 bis 3, **dadurch gekennzeichnet,** daß ein Wasser mit einem Gehalt an halogenierten Ethylenen von insgesamt bis zu etwa 1000 ppb der Einwirkung von Ozon und Elektronenstrahlung unterworfen wird.

5. Verfahren nach einem der Ansprüche 1 bis 4, **dadurch gekennzeichnet,** daß zur Aufrechterhaltung der genannten Mindestkonzentration an Ozon dem sich im Durchfluß befindlichen Wasser direkt im Bereich der Einwirkung der Elektronenstrahlung, bevorzugt quer zur Durchflußrichtung, zusätzlich Ozon, vorzugsweise in Form von mit Ozon angereichertem Starkwasser, zugeführt wird.

6. Verfahren nach einem der Ansprüche 1 bis 5, **dadurch gekennzeichnet,** daß der der eindringenden Elektronenstrahlung zugekehrte Volumsanteil des deren Einwirkungsbereich durchströmenden Wassers mit hohem Durchmischungsgrad mit dessen restlichem Volumsanteil, vorzugsweise durch Herbeiführung turbulenter Strömung gemischt wird.

7. Verfahren nach einem der Ansprüche 1 bis 6, **dadurch gekennzeichnet,** daß im wesentlichen im gesamten Bereich der Elektronenstrahlungseinwirkung der Gehalt des Wassers an gelöstem Ozon auf einen Wert von mindestens 0,1 ppm gehalten wird.

8. Vorrichtung zur Durchführung des Verfahrens nach einem der Ansprüche 1 bis 7, mit mindestens einem Elektronenbeschleuniger und mindestens einer im Bereich von dessen Strahlungskegel angeordneten, jeweils Zu- und Abführungen für fluides Medium aufweisenden und von diesem durchströmbaren Strahlungseinwirkungskammer, welche, bevorzugt an ihrer der Strahlungseinwirkung abgewandten Seite, Öffnungen (153) für die Zufuhr eines ozonhältigen fluiden Mediums aufweist, **dadurch gekennzeichnet,** daß im wesentlichen am Beginn der an die von halogenierte Ethylene aufweisendem Wasser durchströmbaren Durchflußkammer (15) anschließenden Abflußleitung (18) ein Sensor (181) zur Ermittlung des Ozongehaltes angeordnet ist, der über eine Steuerung (182) mit mindestens einem Stellorgan (121), (161) für mindestens ein Zuflußregelorgan (12), (16) mindestens einer Starkwasserzuführungsleitung (11), (111) verbunden ist.

9. Verwendung einer Vorrichtung mit mindestens einem Elektronenbeschleuniger und mindestens einer im Bereich von dessen Strahlungskegel angeordneten, jeweils Zu- und Abführungen für fluides Medium aufweisenden und von diesem durchströmbaren Strahlungseinwirkungskammer, welche, bevorzugt an ihrer der Strahlungseinwirkung abgewandten Seite Öffnungen für die Zufuhr eines ozonhältigen, fluiden Mediums aufweist, mit der Maßgabe, daß die Kammer (15) von halogenierte Ethylene aufweisendem Wasser durchströmt wird und in dasselbe über die genannten Öffnungen (153) mit Ozon angereichertes Starkwasser und/oder Ozon eingebracht wird, wobei im wesentlichen am Beginn der an die Durchflußkammer (15) anschließenden Abflußleitung (18) ein Sensor (181) zur Ermittlung des Ozongehaltes angeordnet ist, der über eine Steuerung (182) mit mindestens einem Stellorgan (121), (161) für mindestens ein Zuflußregelorgan (12), (16) mindestens einer Zuführungsleitung (11), (111) für Starkwasser zu den Öffnungen (153) verbunden ist, für die Aufbereitung, insbesondere Reinigung, von halogenierte Ethylene enthaltenden Wässern für Gebrauch und/oder Genuß durch Mensch und Tier gemäß einem der Ansprüche 1 bis 7.

10. Verwendung der im Anspruch 8 genannten Vorrichtung mit der Maßgabe, daß die der Strahlungseinwirkung abgewandte Seite (155) der Strahlungseinwirkungskammer (15) einen Siebboden oder eine Fritte für die Zuführung von mit Ozon angereichertem Starkwasser und/oder Einbauten (152) zur Erzeugung

EP 0 494 866 B1

turbulenter Strömung aufweist, für den im Anspruch 9 genannten Zweck.

**Claims**

1. A process for the treatment, in particular the purification, of waters, in particular ground water, containing halogenated ethylenes,for the use and consumption by humans and animals, the waters being exposed to ozone and high-energy, in particular ionizing radiation, characterized in that a body of water, in particular ground water, substantially brought to drinking water quality or being of such quality in regard to the components and/or contaminants present, with the exception of the aforementioned halogenated ethylenes and containing ozone from a preceding treatment and/or water, in particular ground water, to which ozone was separately added, is exposed to electron irradiation, preferably during flow, the content of the water in dissolved ozone being kept to a value of at least 0.1 ppm substantially in the entire area of exposure to electron irradiation.

2. The process according to claim 1, characterized in that the concentration of ozone in the water to be treated is adjusted to at least 1 ppm, preferably to from 1 to 10 ppm, on entering into the area of exposure to electron irradiation.

3. The process according to claim 1 or 2, characterized in that the water containing ozone is exposed to electron irradiation with an energy of at least 0.5 MeV.

4. The process according to any one of the claims 1 to 3, characterized in that a body of water with a content in halogenated ethylenes of a total of up to about 1,000 ppb is subjected to ozone and electron irradiation.

5. The process according to any one of the claims 1 to 4, characterized in that in order to maintain the aforesaid minimum concentration of ozone, additional ozone ,preferably in the form of strong water enriched in ozone, is fed to the flowing water directly in the area of exposure to electron irradiation, preferably transversely to the direction of flow.

6. The process according to any one of the claims 1 to 5, characterized in that the volume portion of the ozone-containing water facing the penetrating electron beam is mixed with a high degree of mixing, preferably by generating turbulent flow,with the remaining volume portion of the water flowing through the area of exposure to electron irradiation.

7. The process accoding to any one of the claims 1 to 6, characterized in that the content of the water in dissolved ozone is maintained at a value of at least 0.1 ppm substantially in the entire area of exposure to electron irradiation.

8. An apparatus for carrying out the process according to any one of the claims 1 to 7, having at least one electron accelerator and at least one irradiation exposure chamber arranged in the area of the cone of rays of the accelerator and provided with inlets and outlets for fluid medium flowing through it, the chamber preferably being provided on its side facing away from irradiation exposure with orifices (153) for the supply of an ozone-containing fluid medium, characterized in that substantially at the start of the discharge line (18) disposed downstream of the flow chamber (15) flowable by the waters containing halogenated ethylenes, a sensor (181) for detecting the ozone content is disposed and connected via a control (182) to at least one actuator (121), (161) for at least one flow regulating organ (12), (16) for at least one strong water feed line (11), (111).

9. Use of an apparatus having at least one electron accelerator and at least one irradiation exposure chamber arranged in the area of the cone of rays of the accelerator and provided with inlets and outlets for fluid medium flowing through it, the chamber preferably being provided on its side facing away from irradiation exposure with orifices for the supply of an ozone-containing fluid medium, with the proviso that the chamber (15) is passed by a flow of water containing halogenated ethylenes and that strong water, enriched in ozone and/or ozone is added to the water via the said orifices (153), for the treatment, in particular the purification, of waters containing halogenated ethylenes for the use and/or consumpiton of humans and animals according to any one of the claims 1 to 7.

9

**10.** The use of an apparatus according to claim 8 for the purpose disclosed in claim 9. The use of the apparatus disclosed in claim 8 or 9 with the proviso that the side (155) of the irradiation exposure chamber (15) facing away from irradiation exposure is provided with a perforated tray or frit for the supply of strong water enriched in ozone and/or with baffles (152) for generating turbulent flow , for the purpose disclosed in claim 9.

**Revendications**

**1.** Procédé pour le traitement et en particulier l'épuration d'eaux et notamment d'eaux souterraines, contenant des éthylènes halogénés, pour les rendre utilisables ou potables pour l'homme et les animaux, ces eaux étant soumises à l'action de l'ozone et d'un rayonnement de haute énergie, en particulier un rayonnement ionisant, **caractérisé en ce qu'**une eau, en particulier une eau souterraine, répondant pour l'essentiel à la définition de l'eau potable ou à laquelle a été conférée cette qualité mesurée en fonction de ses éléments et/ou des substances polluantes qu'elle contient à l'exception des éthylènes halogénés, et contenant de l'ozone résultant d'un traitement préalable et/ou à laquelle on apporte séparément de l'ozone, est soumise, en circulation, à l'action d'un faisceau électronique, la concentration de l'eau en ozone ayant été ou étant dosée de telle manière que, essentiellement à la sortie de la zone d'action du faiceau électronique, ladite eau présente une concentration en ozone de 0,1 ppm au minimum.

**2.** Procédé selon la revendication 1, **caractérisé en ce que** la concentration en ozone de l'eau à traiter est établie à au moins 1 ppm à l'entrée dans la zone d'action du faiceau électronique, avantageusement à une valeur comprise entre 1 et 10 ppm.

**3.** Procédé selon la revendication 1 ou 2, **caractérisé en ce que** l'eau contenant de l'ozone est exposée à l'action d'un faiceau électronique d'une énergie minimum de 0,5 MeV.

**4.** Procédé selon une des revendication 1 à 3, **caractérisé en ce qu'**une eau présentant un taux d'éthylènes halogénés pouvant aller jusqu'à env. 1000 ppb au total est soumise à l'action de l'ozone et d'un faisceau électronique.

**5.** Procédé selon une des revendication 1 à 4, **caractérisé en ce que,** pour assurer le maintien de la concentration minimum en ozone, il est ajouté de l'ozone à l'eau en circulation, directement dans la zone d'action du faisceau électronique avantageusement transversalement au sens d'écoulement, de préférence sous forme d'eau enrichie d'ozone.

**6.** Procédé selon une des revendication 1 à 5, **caractérisé en ce que** la partie du volume d'eau traversant la zone d'action du faisceau électronique qui se trouve du côté de la pénétration du faisceau, est mélangée intimement à la partie restante de ce volume, ceci étant obtenu avantageusement en provoquant un écoulement turbulent.

**7.** Procédé selon une des revendication 1 à 6, **caractérisé en ce que,** essentiellement dans toute la zone d'action du faisceau électronique, la teneur de l'eau en ozone dissout est maintenue à une valeur de 0,1 ppm au minimum.

**8.** Dispositif pour l'application du procédé selon une des revendications 1 à 7, comportant au moins un accélérateur d'électrons et au moins une chambre d'exposition au rayonnement électronique située dans le cone du faisceau venant de l'accélérateur d'électrons, ladite chambre étant équipée pour assurer l'arrivée et l'évacuation du fluide qui doit pouvoir circuler à l'intérieur et comportant, avantageusement du côté opposé à l'action du faisceau électronique, des ouvertures (153) pour l'introduction d'un fluide contenant de l'ozone, dispositif **caractérisé en ce que** un détecteur (181) permettant de mesurer la teneur en ozone, est disposé pour l'essentiel au début de la conduite d'écoulement (18) sortant de la chambre (15) traversée par l'eau qui contient des éthylènes halogénés, ledit détecteur étant relié grâce à une commande (182) comportant au moins un asservissement (121), (161) pour au moins un organe de réglage du débit (12), (16) sur au moins une conduite d'amenée d'eau à forte concentration en ozone (11), (111).

**9.** Utilisation d'un dispositif comportant au moins un accélérateur d'électrons et au moins une chambre d'exposition au rayonnement électronique située dans le cone du faisceau venant de l'accélérateur d'électrons, ladite chambre étant équipée pour assurer l'arrivée et l'évacuation du fluide qui doit pouvoir circuler à l'intérieur et comportant, avantageusement du côté opposé à l'action du faisceau électronique, des ouvertures (153) pour l'introduction d'un fluide contenant de l'ozone, de telle manière que la chambre (15) soit traversée par de l'eau contenant des éthylènes halogénés et que de l'eau enrichie en ozone et/ ou de l'ozone soi(en)t introduit(e/s) dans ladite chambre par les ouvertures (153), un détecteur (181) destiné à mesurer la teneur en ozone, disposé essentiellement au début de la conduite d'écoulement ( 18) qui sort de la chambre (15), étant relié aux ouvertures (153) moyennant une commande (182) comportant au moins un asservissement (121), (161) pour au moins un organe de réglage du débit (12), (16) sur au moins une conduite d'amenée d'eau à forte concentration en ozone (11), (111), en vue du traitement et en particulier de l'épuration d'eaux contenant des éthylènes halogénés afin de les rendre utilisables ou potables pour l'homme et les animaux, en conformité avec une des revendications 1 à 7.

**10.** Utilisation du dispositif décrit dans la revendication 8, de telle manière que le côté opposé à l'incidence du faisceau électronique (155) de la chambre d'exposition au rayonnement (15) comporte un fond à tamis ou un fond fritté pour l'introduction d'eau enrichie en ozone et/ou des chicanes (152) pour provoquer un écoulement turbulent dans le but décrit à la revendication 9.